Europäisches Patentamt

European Patent Office

Office européen des brevets

(11) Veröffentlichungsnummer: **0 122 303**
A1

(12) **EUROPÄISCHE PATENTANMELDUNG**

(21) Anmeldenummer: **83103597.7**

(22) Anmeldetag: **14.04.83**

(51) Int. Cl.³: **B 60 C 23/12**

(43) Veröffentlichungstag der Anmeldung:
**24.10.84 Patentblatt 84/43**

(84) Benannte Vertragsstaaten:
**AT BE CH DE FR GB IT LI LU NL SE**

(71) Anmelder: **Linke, Konrad**
**Westerburgstrasse 9**
**D-4047 Dormagen 5(DE)**

(72) Erfinder: **Linke, Konrad**
**Westerburgstrasse 9**
**D-4047 Dormagen 5(DE)**

(54) **Radangetriebene Luftpumpe für Reifen.**

(57) Bei diesem Pumpsystem ist eine Pumpe (1) an der Achse (4) bzw. Radnabe des Rades befestigt. Am oberen Ende befindet sich ein Querbalken (2). Zusätzlich sind am Rahmen (5) des Fahrzeuges exzentrische Laufschienen (3) befestigt. Wird das Rad gedreht und setzt der Querbalken (2) auf die exzentrisch gestaltete Laufschiene (3) auf, so beginnt sich das Pumpenoberteil (6) in das Pumpenunterteil (7) zu drücken und der Pumpvorgang beginnt. Die Krümmung der Laufschiene (3) ist mit dem Hubweg der Pumpe so abgestimmt, daß am Ende der exzentrischen Krümmung der maximale Hub erreicht ist. Eine Druckfeder (19) bringt das Pumpenteil wieder in die Ausgangsstellung.

Die Luft wird von der Pumpe (1) durch eine Rohr- bzw. Schlauchverbindung (16) über ein Ventil (17) in den Schlauch bzw. Reifen (18) gedrückt.

Der Überdruck wird mit einem überdruckventil (20), der sich durch einen Pfeifton bemerkbar macht, geregelt. Der Pumpvorgang wird durch Verstellung des Querbalkens (2) um 90 Grad abgestellt.

_Fig. 1_   4

Radangetriebene Luftpumpe für Reifen
(Hier besonders für Zweiradfahrzeuge).

Die Erfindung bezieht sich auf eine Pumpe mit der Luft während des Fahrbetriebes und auch bei Stillstand des Fahrzeuges in die Reifen gepumpt werden kann. Dabei ist das Pumpenteil in das Rad eingebaut, während eine exzentrische Laufschiene am Rahmen befestigt ist, mit der dann die Hubbewegung der Pumpe beim drehenden Rad erzeugt wird.

Luftreifen werden bei Fahrrädern mit einer Handpumpe aufgepumpt. Dies ist oft nur, besonders für Kinder und ätere Personen, unter großer Kraftanstrengung möglich und führt dazu, daß meistens zu wenig Luft eingepumpt wird und die Lebensdauer der Reifen und Schläuche sehr kurz ist. Bei motorisierten Zweiradfahrzeugen wird das aufpumpen mit einer Fußpumpe oder aus einem Druckbehälter, der mit einem Kompressor gefüllt wird, vorgenommen (hauptsächlich bei Tankstellen).
In beiden Fällen ist das Aufpumpen nur im Stillstand möglich. Meistens muß das Fahrzeug ohne Luft in einem Reifen nach Hause oder zu einer Werkstatt geschoben werden. Dies auch unter dem Gesichtspunkt, daß Zweiräder kein Reserverad haben.

Hier will die Erfindung Abhilfe schaffen. Die Erfindung, wie sie in den Ansprüchen gekennzeichnet ist, löst die Aufgabe mit einem Pumpensystem, das mit Hilfe des drehenden Rades betätigt wird.

Dies geschieht derart, daß eine Doppelhubpumpe, wie hier am Beispiel, oder auch eine Membranpumpe, an der Achse des Rades befestigt wird. Am oberen Ende der Pumpe befindet sich ein Querbalken, der beim drehenden Rad in die am Rahmen befestigten exzentrischen Laufschienen eingreift. Durch die exzentrische Laufschiene wird der Querbalken senkrecht zur Achse bewegt und somit der Hub der Pumpe erzeugt. Durch eine Spiralfeder wird der Pumpenkolben wieder in die Anfangsstellung gedrückt.

Durch die Erfindung werden folgende Vorteile erreicht:

1. Während des Fahrbetriebes kann Luft in die Reifen nachgepumpt werden.

2. Eine Korrektur des Luftdruckes ist während des Fahrbetriebes möglich.

3. Bei motorisierten Zweiradfahrzeugen braucht nicht eine Tankstelle angefahren zu werden.

4. Die Lebensdauer der Reifen und Schläuche wird wesentlich erhöht, da der Verschleiß und die Lebensdauer vom richtigen Luftdruck abhängen.

5. Die Fahrbereitschaft der Räder wird wesentlich erhöht, da bei Luftdruckverlust, wie er zum Beispiel durch eingefahrene Reißzwecken, Nägel, poröse Schläuche und Reifen u. s. w. entsteht, die entweichende Luft während des Fahrbetriebes sofort wieder nachgepumpt werden kann und somit das Fahrzeug einsatzbereit bleibt.

6. Die Fahrsicherheit, besonders bei schneller fahrenden Fahrzeugen wird erhöht, da eine optimale Fahrstabilität nur mit richtigem Luftdruck erreicht werden kann. Dies gilt sowohl für Fahrräder, als auch für motorisierte Zweiradfahrzeuge.

Im folgenden wird die Erfindung anhand von lediglich einem Ausführungsweg darstellenden Zeichnung näher erläutert.

Es zeigt die radangetriebene Luftpumpe (1), die an der Achsnabe des Rades befestigt ist.

Am Pumpenoberteil (6) befindet sich ein Querbalken (2) befestigt. Dieser Querbalken greift bei dem drehenden Rad in die Laufschiene (3) ein. Die Laufschiene ist so Konstruiert, daß sie nicht einen einheitlichen Radius zu dem Achsmittelpunkt des Rades hat, sondern eine Exzentrisietät aufweist. Der Radius ist dort am größten, wo der Querbalken (2) der Pumpe aufsetzt und nimmt im weiteren Verlauf ab. Die Verkleinerung des Radius ist identisch mit dem Hubweg der Pumpe. Setzt der Querbalken (2) auf die Laufschiene (3) auf, so beginnt sich das Pumpenoberteil (6) in das Pumpenunterteil (7) zu schieben.

In der Mitte des Pumpenunterteils (7) befindet sich ein Rohr (8). Dieses Rohr hat eine Bohrung (9) am unteren Ende. Auf diesem Rohr ist verschiebar eine Manschette (1o) bzw. ein Kolben (11) angebracht. Am oberen Ende des Rohres (8) ist mit dem Rohr fest verbunden eine weitere Manschette (12) bzw. ein weiterer Kolben (13) eingebaut.

Wird nun das Pumpenoberteil (6) weiter in das Pumpenunterteil (7) geschoben, so wird die im Raum (14) des Pumpenunterteils (7) befindliche Luft mit Hilfe der Manschette (1o) bzw. des Kolbens (11) in die Bohrung (9) nach oben, in den Raum (15) des Pumpenoberteils (6) gedrückt. Beide Luftmassen aus Raum (14) und (15) werden dann beim weiteren Zusammenschieben beider Pumpenteile in die Rohr- bzw. Schlauchverbindung (16) gedrückt, welche dann über ein Ventil (17) in den Reifen (18) des Rades gelangt.

Bei der gezeigten Ausführung der Laufschiene wird mit jeder Radumdrehung ein Hub mit der Pumpe erzeugt. Bei Verlängerung der Laufschiene in die Umfangsrichtung und durch Widerholung der gleichen Krümmung können mehrere Hübe bei einer Radumdrehung herbeigeführt werden.

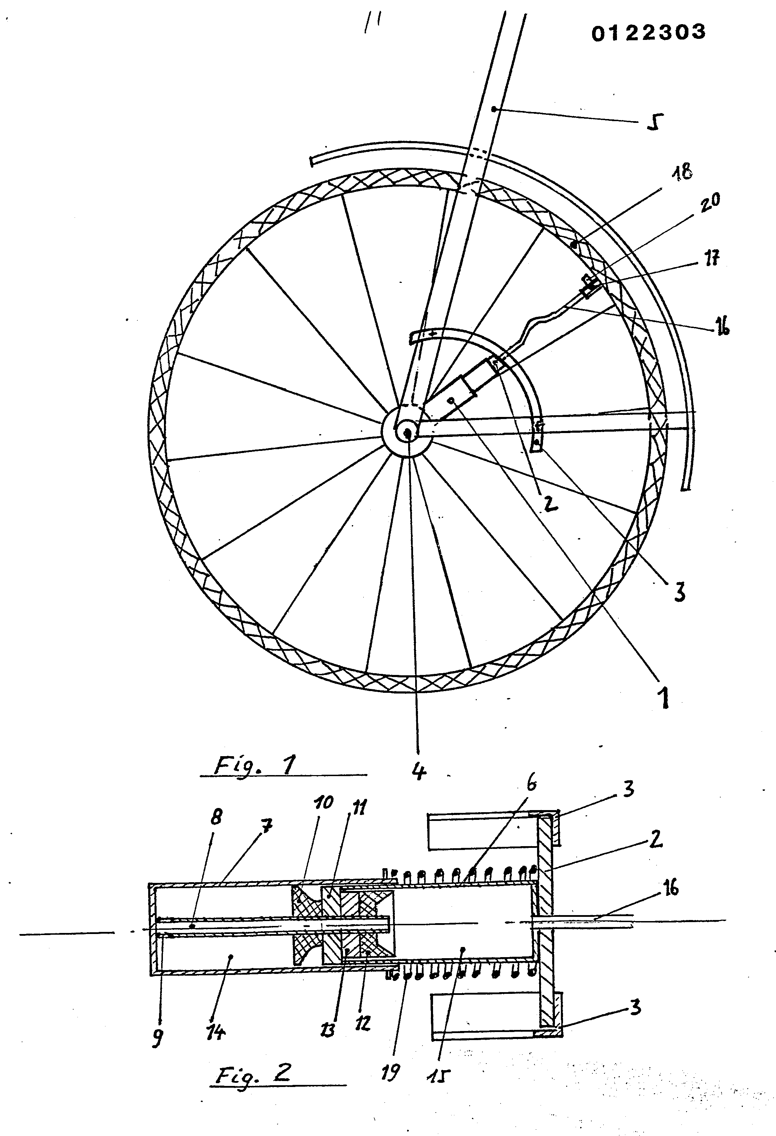

Eine in der Zeichnung nicht dargestellte, jedoch im Rahmen der Erfindung mögliche Ausgestaltung besteht auch darin, anstelle der Anbringung der Pumpe senkrecht zur Achse, diese parallel zur Achse zu legen. Dieses Pumpensystem kann in jedes Zweiradfahrzeug nachgerüstet werden, ohne Veränderungen an den Fahrzeugteilen vorzunehmen.

Während die Laufschienen am Vorder- und Hinterteil des Rahmens fest installiert werden, kann das Pumpenteil (1) selbst, vom Vorderrad zum Hinterrad und umgekehrt, je nach Bedarf, umgesteckt werden.

Der Überdruck wird durch ein eingebautes Überdruckventil geregelt. Bei Überschreiten des erforderlichen Luftdruckes entweicht die überhöhte Luft durch das Ventil und erzeugt durch das entsprechend ausgerüstete Ventil einen Pfeifton. Der Querbalken kann dann um 9o Grad verdreht werden, und somit der Pumpenvorgang beendet werden.

Patentansprüche

1.) Die radangetriebene Luftpumpe für Reifen, vorzugsweise für Zweiradfahrzeuge, dadurch gekennzeichnet, daß die Pumpe (1) an der Achse (4) bzw. an der Radnabe befestigt ist, und ein am oberen Ende der Luftpumpe befestigter Querbalken (2) in die am Rahmen (5) montierten exzentrischen Laufschienen (3) eingreift und bei dem drehenden Rad die Pumpe betätigt.

2.) Luftpumpe nach Anspruch 1, dadurch gekennzeichnet, daß im Pumpenoberteil (6) und Pumpenunterteil (7) je eine Manschette (1o u. 12) bzw. ein Kolben (11 u. 13) angeordnet ist und dadurch bei einem Hub die doppelte Luftmenge gefördert wird und eine niedrige Bauweise gewährleistet ist.

3.) Luftpumpe nach Anspruch 1 und 2, dadurch gekennzeichnet, daß die auf dem Rohr (8) verschiebare Manschette (1o) bzw. Kolben (11) am Pumpenoberteil (6) befestigt ist und daß zwischen dem Querbalken (2) und Pumpenunterteil (7) eine Druckfeder (19) angeordnet ist, die die Ausgangsstellung der Pumpe nach jedem einzelnen Pumpenhub wieder herstellt.

4.) Luftpumpe nach einem oder mehreren der Ansprüche 1 bis 3, dadurch gekennzeichnet, daß der Luftpumpe ein Überdruckventil (20) zugeordnet ist, das bei Überschreiten des erforderlichen Luftdrucks einen Pfeifton erzeugt, und die Luft,die zu viel eingepumpt wird wieder abläßt.

5.) Luftpumpe nach 1 bis 4, dadurch gekennzeichnet, daß bei Erreichen des erforderlichen Luftdrucks durch verdrehen des Querbalkens (2) um 9o Grad der Pumpvorgang abgestellt werden kann.

6.) Luftpumpe, dadurch gekennzeichnet, daß durch die Krümmung der Laufschienen (3) sowohl ein Pumpenhub je Radumdrehung möglich ist, als auch, daß bei Verlängerung der Laufschiene (3) in die Umfangsrichtung, und bei Wiederholung der gleichen Krümmung, mehrere Pumpenhübe je Radumdrehung erzeugt werden können.

0122303

Fig. 1

Fig. 2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A- 892 969 (M. CANOVA) <br> * Ansprüche; Figuren * <br><br> --- | 1,3,4 | B 60 C  23/12 |
| X | FR-A- 452 132 (L. CAYOTTE) <br> * Seite 2, Zeilen 31-38; Ansprüche; Figuren 1-3 * <br><br> --- | 1,3,6 | |
| X | GB-A- 28 308 (C.W. TANNER) <br> * Ansprüche; Figuren 3,7 * <br><br> --- | 1,2 | |
| X | DE-C- 524 064 (K. HANNIG) <br> * Anspruch; Figuren 1,2 * <br><br> --- | 1 | |
| X | DE-C- 100 061 (M. FRIEDLAENDER) <br> * Ansprüche; Figuren 1-4 * <br><br> --- | 1 | **RECHERCHIERTE SACHGEBIETE (Int. Cl. ³)** |
| X | FR-A- 919 489 (F.J. CAMM) <br> * Ansprüche; Figuren 1,2,5 * <br><br> --- | 1 | B 60 C |
| A | FR-A- 593 841 (K. POULAIN) <br> * Ansprüche; Figuren 1-3 * <br><br> --- | 1,6 | |
| A | FR-A- 761 011 (F. GANGLOFF) <br> * Ansprüche; Figuren 1-3 * <br><br> ----- | 1,6 | |

Der vorliegende Recherchenbericht wurde für alle Patentansprüche erstellt.

| Recherchenort <br> DEN HAAG | Abschlußdatum der Recherche <br> 12-01-1984 | Prüfer <br> FRANKS B.G. |
|---|---|---|